# EUROPÄISCHE PATENTANMELDUNG

(11) **EP 0 947 375 A1**
(43) Veröffentlichungstag der Anmeldung: **06.10.1999**
(21) Anmeldenummer: 99105561.7
(22) Anmeldetag: 18.03.1999
(51) Int. Cl.: B60L 5/22

(54) **Stromabnehmersystem**

(30) Priorität: 31.03.1998 DE 19814417
(71) Anmelder: SIEMENS AKTIENGESELLSCHAFT, 80333 München (DE)
(72) Erfinder: Stein, Matthias, Dr., 80639 München (DE)

(57) **Zusammenfassung**

Es wird ein Stromabnehmersystem vorgestellt, welches für elektrisch antreibbare Fahrzeuge vorgesehen und mit unterschiedlichen Oberleitungen befahrbar ist. Das Stromabnehmersystem umfaßt wenigstens einen Stromabnehmer mit wenigstens einer quer zur Fahrtrichtung angeordneten Schleifleiste. Die Schleifleiste (9) ist am Stromabnehmer (1) wechselbar gehaltert. Benachbart des Stromabnehmers ist ein Magazin (25) zur bevorratenden Halterung mehrerer, für unterschiedliche Oberleitungen ausgelegter Schleifleisten (9,26,27) vorgesehen. Im Bereich zwischen Stromabnehmer und Magazin ist ferner eine Transporteinrichtung (20) vorgesehen, mit deren Hilfe die am Stromabnehmer befindliche Schleifleiste (9) in das Magazin (25) und vice versa eine im Magazin gehalterte Schleifleiste (26,27) zum Stromabnehmer transportierbar ist.

## Beschreibung

Die Erfindung betrifft ein Stromabnehmersystem, welches für elektrisch antreibbare Fahrzeuge vorgesehen ist und mit dem unterschiedliche Oberleitungen befahrbar sind und welches wenigstens einen Stromabnehmer mit wenigstens einer quer zur Fahrtrichtung angeordneten Schleifleiste umfaßt.

Insbesondere bei elektrisch betriebenen Fernverkehrszügen, die grenzüberschreitend eingesetzt werden, ist es in der Regel erforderlich, für jedes Land unterschiedliche Schleifleisten am Stromabnehmer einzusetzen. Die Gründe hierfür liegen u.a. darin, daß die Bahnen beispielsweise in Europa auf ihren mit verschiedenen Stromsystemen elektrifizierten Strecken Stromabnehmer unterschiedlicher Breite und Form verwenden. Je nach den zu übertragenden Strömen werden auch unterschiedliche Schleifstücke auf den Schleifleisten, z.B. aus Metall, Kohle oder metallisierter Kohle, eingesetzt. Die Gründe für unterschiedliche Stromabnehmerausführungen liegen jedoch nicht nur in den verschiedenen Spannungen und den unterschiedlichen Strömen, die die Stromabnehmer zu übertragen haben; teilweise liegen die Gründe auch in speziellen Anforderungen, die an den Oberbau eines Zuges gestellt werden.

Aus dem Vorgenannten ergibt sich, daß auf den eingangs erwähnten grenzüberschreitenden Strecken unterschiedliche Stromabnehmer mit unterschiedlichen Schleifleisten mitgeführt werden müssen. Sobald ein Zug für mehrere Länder vorgesehen ist, muß zwangsläufig eine entsprechend große Anzahl von länderspezifischen Stromabnehmern mit entsprechend ausgebildeten Schleifleisten mitgeführt werden. Als besonders nachteilig sind hierbei das deutliche Mehrgewicht durch die zusätzlichen Stromabnehmer und die zusätzlichen Maßnahmen zur Befestigung der Stromabnehmer anzusehen. Die konstruktive Ausarbeitung dieser zusätzlichen Befestigung wirkt sich außerdem auch durch einen deutlichen Mehraufwand auf den Rohbau und eine deutliche Verschlechterung der Aeroakustik des Zuges aus. Außerdem müssen am Zug relativ teuere und mit hohem Aufwand zu verlegende Hochspannungskabel und Schaltelemente, die zu den Stromabnehmern führen, vorgesehen werden.

Verschiedene andere, bekannte Lösungen, bei denen die Stromabnehmer als Mehrzweckstromabnehmer ausgebildet sind, erweisen sich entweder als konstruktiv zu aufwendig oder sie entsprechen nicht den durch die einzelnen Länder vorgegebenen Vorschriften.

Ein Stromabnehmer, wie er beispielsweise in der DE-195 20 233 beschrieben ist, erlaubt zwar, die Schleifleisten unterschiedlichen Oberleitungen anzupassen, indem die Schleifleisten in ihrer Länge einstellbar und die einander gegenüberliegenden Endhörner in ihrem Abstand zueinander variierbar ausgeführt sind; die Schleifstücke der Schleifleisten sind jedoch weder vom Material noch von der Formgebung und den Abmessungen her geeignet, den länderspezifischen unterschiedlichen Anforderungen bzw. Vorschriften gerecht zu werden. Nachteilig ist ferner auch, daß an den Stromabnehmer zusätzliche Stellmittel zum Verstellen der Schleifleisten vorgesehen werden müssen.

Der im Anspruch 1 angegebenen Erfindung liegt die Aufgabe zugrunde, demgegenüber eine Verbesserung zu schaffen und ein Stromabnehmersystem entsprechend dem Oberbegriff des Patentanspruches zu schaffen, mit dem sich die angeführten Nachteile vermeiden lassen.

Dadurch, daß bezüglich der Gestaltung der Schleifleiste gemäß der Erfindung nur ein einziger Stromabnehmer für alle in Frage kommenden landesspezifischen Anforderungen eingesetzt zu werden braucht, sind nur die wirklich unterschiedlichen Teile des Stromabnehmers, nämlich die Schleifleisten, in der jeweils notwendigen Ausführung mitzuführen. Eventuell vorhandene Unterschiede bei den Anpreßdrücken lassen sich durch verschiedene Regelkennlinien im pneumatischen Hubantrieb realisieren.

Die unterschiedlichen Schleifleisten sind gemäß einer vorteilhaften Ausführungsform in einem Magazin, welches mit einer Transporteinrichtung zusammenwirkt, bevorratet gehaltert. Je nach zu befahrendem Land kann die entsprechende Schleifleiste dem Stromabnehmer zugeführt werden. Das An- und Abkoppeln der Schleifleiste bei einem Schleifleistenwechsel an den bzw. vom Stromabnehmer kann vorteilhafterweise selbsttätig erfolgen, indem Stromabnehmer und Schleifleiste mit entsprechenden elektrischen und mechanischen Kontakt- und Rastelementen ausgestattet sind.

Die Transporteinrichtung kann in vorteilhafter Ausgestaltung der Erfindung einen motorisch verstellbaren Greifarmmechanismus umfassen, der im Bereich zwischen Magazin und Stromabnehmer angeordnet ist. Bei einem Andocken der Greifarme an die Schleifleiste können Halteelemente in Funktion treten die die Schleifleiste während des Transports vom Magazin zum Stromabnehmer und vice versa festhalten.

Das Magazin kann vorteilhafterweise eine motorisch antreibbare umlaufende Aufnahme- und Halteeinrichtung enthalten, in der mehrere Schleifleisten auf Vorrat gehaltert werden können. Die Aufnahme- und Halteeinrichtung kann einen Kettentrieb mit zwei parallel verlaufenden endlosen Ketten umfassen, die über ihre Umlauflänge verteilt mehrere Verbindungselemente mit entsprechend ausgebildeten Aufnahmeeinrichtungen zur Halterung der Schleifleisten aufweisen. Vorteilhafterweise ist zur Realisierung eines synchronen Laufes für beide Ketten ein gemeinsamer, außerhalb des Kettentriebs angeordneter Antriebsmechanismus vorgesehen.

Eine vorteilhafte Ausführungsform der Erfindung wird nachfolgend anhand der Zeichnung näher erläutert.

Es zeigen:
Figuren 1A, 1B das erfindungsgemäße Stromabnehmersystem in einer Seitenansicht,
Figur 2 einen Teil des Stromabnehmersystems in einer Seitenansicht,
Figur 3 einen Teil des Stromabnehmersystems in der Draufsicht,
Figur 4 einen Teil des Stromabnehmersystems in Vorderansicht,
Figuren 5 und 6 Details aus Figuren 2/3.

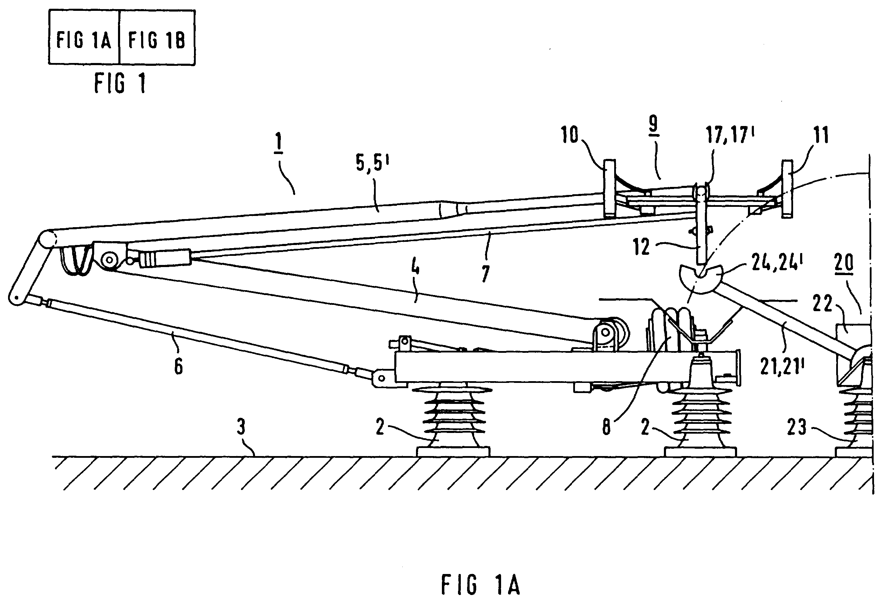

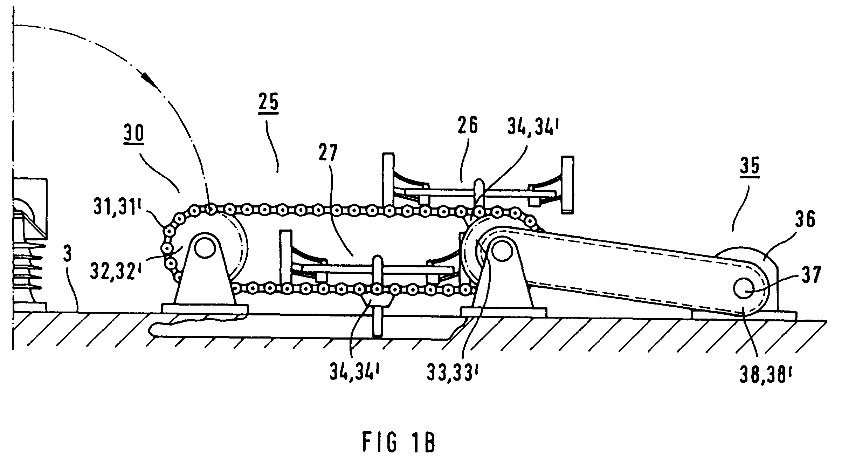

Der Abschnitt 1A in Figur 1 zeigt in einer Seitenansicht einen als Halbschere ausgebildeten Stromabnehmer 1, der hier in einem teilweise abgesenkten Zustand gezeichnet ist. Der Stromabnehmer 1 ist in an sich bekannter Weise über Isolatoren 2 am Dachrahmen 3 eines nicht näher dargestellten Fahrzeuges befestigt. Nachdem der Aufbau des Stromabnehmers bekannt ist, braucht er hier nicht näher erläutert zu werden. Im folgenden werden deshalb nur seine wesentlichen Konstruktionselemente angeführt. Die Halbschere besteht aus dem Unterarm 4, zwei fest miteinander verbundenen Oberarmen 5, 5' sowie der Kuppelstange 6 und der Parallelführungsstange 7. Das miteinander gelenkig verbundene Gestänge wird mittels einer Pneumatik-Hubeinrichtung 8 verstellt, wodurch die am freien Ende der Oberarme gelenkig angeordnete Schleifleiste 9 unter Beibehaltung ihrer horizontalen Ausrichtung in der Vertikalen verstellt und so gegen den nicht eingezeichneten Fahrdraht angedrückt werden kann.

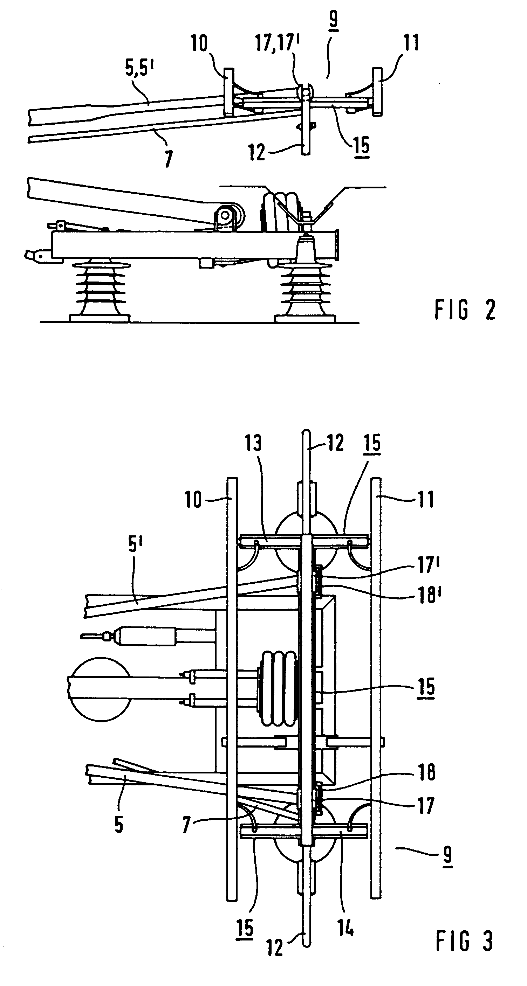

Der Aufbau der Schleifleiste 9 und deren Halterung am Gestänge 4 bis 7 wird anhand der Figuren 2 bis 4 näher erläutert.

Die Schleifleiste 9 umfaßt zwei parallel angeordnete und quer zum Fahrdraht verlaufende Schleifstücke 10, 11 und einen dazwischen angeordneten Überfahrbügel 12. Die Teile 10, 11 und 12 sind durch Streben 13, 14 miteinander verbunden und bilden eine starre Einheit, die an einem mit 15 bezeichneten Schleifleistenträger abnehmbar gehaltert ist. Der Schleifleistenträger 15 ist als I-förmiges Gestänge ausgebildet und weist im Querschnitt halbschalenförmige Tragelemente 16 auf, in die die Querstreben 13, 14 und der Überfahrbügel 12 einlegbar sind. Der Schleifleistenträger 15 ist an den Gestängeteilen 5, 5' und 7 so gehaltert, daß er bei einem Verschwenken unter Beibehaltung der horizontalen Lage in der bereits geschilderten Weise verstellt werden kann.

Zur Aufnahme des Schleifleistenträgers 15 sind an den freien Enden der Oberarme 5, 5' halbschalenförmige, geschlitzte Muffen 17, 17' angeschweißt, in die der Überfahrbügel einlegbar ist, wobei im Bereich der Muffen das I-förmige Gestänge unterbrochen und durch Verbindungsstege 18, 18' überbrückt ist (Fig. 3).

Eine Besonderheit liegt in der Gestaltung dieser Aufnahmeteile, die mit dem Hochfahren des Stromabnehmers eine selbsttätige Verriegelung und mit dem Absenken eine selbsttätige Entriegelung der Schleifleiste am Stromabnehmer ermöglichen.

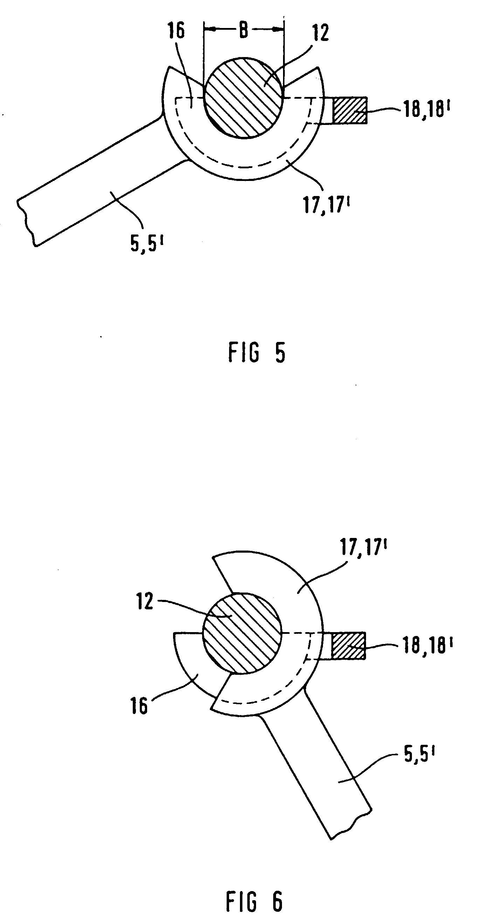

Die Gestaltung der Aufnahmeteile wird anhand der Figuren 5 und 6 näher erläutert, wobei die Figur 5 die Anordnung in einer Entriegelungsstellung und die Figur 6 die Aufnahmeteile in Verriegelungsposition zeigen.

Die Schlitzbreite B der Muffen 17, 17' entspricht etwa dem Durchmesser des Profils des Überfahrbügels 12. Gleiches gilt für die Tragelemente 16 des Schleifleistenträgers 15. Im abgesenkten Zustand (Fig. 5) läßt sich also der Überfahrbügel 12 in die geschlitzten Muffen 17, 17' einlegen. Beim Hochfahren des Stromabnehmers machen die beiden Oberarme 5, 5' eine Schwenkbewegung; wegen der starren Verbindung der geschlitzten Muffen 17, 17' mit den Oberarmen 5, 5' entsteht zwischen den Muffen 17, 17' und den Tragelementen 16 eine Relativbewegung, die zu einer Verriegelung des Überfahrbügels 12 führt (Fig. 6).

Allerdings sind hierzu auch andere Formen von Verriegelungen denkbar.

Zur elektrischen Kontaktierung können an sich bekannte Elemente vorgesehen werden, Z.B. in Form von federbelasteten Kontaktstiften oder -plättchen, die beim Auflegen der Schleifleiste auf den Schleifleistenträger den Kontakt zwischen den elektrischen Verbindungskabeln herstellen.

Im folgenden wird unter Bezugnahme auf die Figuren 1A und 1B der Zeichnung das An- und Abkoppeln der Schleifleisten und Einbringen in ein entsprechendes Bevorratungsmagazin näher beschrieben.

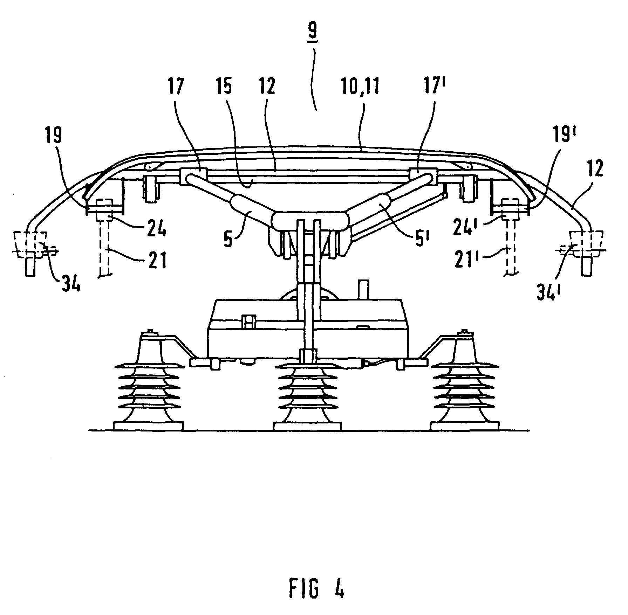

Benachbart der Schleifleiste 9 und in deren Absenkbereich ist eine Transporteinrichtung 20 vorgesehen, mit deren Hilfe die am Stromabnehmer 1 befindliche Schleifleiste abgekuppelt und in ein daneben befindliches Magazin transportiert werden kann. Die Transporteinrichtung 20 umfaßt zwei parallel verlaufende Greifarme 21, 21', die mittels einer elektrischen Antriebseinheit 22 in der angedeuteten Pfeilrichtung geschwenkt werden können. Die Antriebseinheit 22 ist wiederum über einen Isolator 23 am Dachrahmen 3 des Fahrzeuges befestigt. Die Greifarme 21, 21' sind an ihren freien Enden mit Greif- und gegebenenfalls Rascelementen 24, 24' ausgestattet, die so ausgebildet sind, daß sie bei Unterfahren von mit 19, 19' bezeichneten Haltebügeln (Fig. 4) die Schleifleiste 9 selbsttätig rastend, aber drehbar, fixieren.

Anstelle der Haltebügel 19, 19' ist auch ein direktes Fixieren am Überfahrbügel 12 denkbar. Darauf zu achten ist, daß der Schwerpunkt der Schleifleiste 9 unter der Fixierungsebene zu liegen kommt, so daß die horizontale Ausrichtung der Schleifleiste auch während der folgenden Schwenkbewegung erhalten bleibt. Andernfalls muß die Schleifleiste 9 während der Schwenkbewegung durch eine mechanische/elektrische Einrichtung horizontal ausgerichtet werden.

Bei einem Hochschwenken der Greifarme wird die gesamte Schleifleiste 9 vom Schleifleistenträger 15 sowohl elektrisch als auch mechanisch abgekoppelt. Die Schleifleiste 9 kann sodann vom Stromabnehmer abgehoben und in der durch die strichpunktierten Linien angedeutete Schwenkrichtung nach rechts geschwenkt werden (Fig 1A).

Entsprechend der bedienbaren Spannungen ist von allen spannungsführenden Teilen des Stromabnehmers und der Transporteinrichtung der zur maximalen Spannung zugehörige Mindestabstand (150 mm bei 15 KV bzw. 220 mm bei 25 KV) einzuhalten.

Aus Figur 1B der Zeichnung ist zu entnehmen, daß im Schwenkbereich der Transporteinrichtung 20 auf dem Dachrahmen 3 ein Magazin 25 zur Aufnahme mehrerer unterschiedlicher Schleifleisten 26, 27 angeordnet ist. Das Magazin 25 umfaßt einen Kettentrieb 30 mit zwei parallel verlaufenden endlosen Ketten 31, 31', die über zwei Kettenradpaare 32, 32' und 33, 33' geführt sind. Wegen der Seitenansicht sind nur die in der Ansicht vorderen Teile des Kettentriebs 30 erkennbar. Der Abstand der beiden Ketten 31, 31' und damit auch der Kettenräder der beiden Kettenpaare 32, 32' und 33, 33' ist so bemessen, daß zwischen den Ketten ausreichend Platz zur Aufnahme der Schleifleisten bleibt. Die beiden parallel verlaufenden endlosen Ketten sind mit mehreren quer verlaufenden Verbindungselementen versehen, an denen Aufnahmetüllen 34, 34' angelenkt sind. Die Aufnahmetüllen 34, 34' sind so gestaltet, daß die abgebogenen Enden des Überfahrbügels 12 beim Absenken der Schleifleiste in das Magazin in die Aufnahmetüllen 34, 34' eintauchen können. In Figur 4 sind die Eingriffspositionen der Aufnahmetüllen mit den Bügelenden gestrichelt dargestellt. Das Kettenradpaar 33, 33' wird von einem außerhalb des Kettentriebes 30 angeordneten Antriebsmechanismus 35 angetrieben. Der Antriebsmechanismus 35 umfaßt einen Antriebsmotor 36 mit einer durchgehenden Antriebswelle 37, an deren beiden Enden nicht näher bezeichnete Antriebsritzel aufgesetzt sind, die über zwei weitere Kettentriebe 38, 38' die Kettenräder des einen Kettenradpaares 33, 33' antreiben.

## Patentansprüche

1. Stromabnehmersystem, welches für elektrisch antreibbare Fahrzeuge vorgesehen und mit unterschiedlichen Oberleitungen befahrbar ist und welches wenigstens einen Stromabnehmer (1) mit wenigstens einer quer zur Fahrtrichtung angeordneten Schleifleiste (9) umfasst, **dadurch gekennzeichnet,** daß die Schleifleiste (9) am Stromabnehmer (1) wechselbar gehaltert ist, daß benachbart des Stromabnehmers ein Magazin (25) zur bevorratenden Halterung mehrerer, für unterschiedliche Oberleitungen ausgelegter Schleifleisten (9,26,27) vorgesehen ist, und daß ferner im Bereich zwischen Stromabnehmer und Magazin eine Transporteinrichtung (20) vorgesehen ist, mit deren Hilfe die am Stromabnehmer befindliche Schleifleiste (9) in das Magazin (25) und vice versa eine im Magazin gehalterte Schleifleiste (26,27) zum Stromabnehmer transportierbar ist.

2. Stromabnehmersystem nach Anspruch 1, **dadurch gekennzeichnet,** daß Stromabnehmer (1) und Schleifleiste (9) mit Mitteln zur selbsttätigen mechanischen und elektrischen An- und Abkoppelung der Schleifleiste (9) bei einem Schleifleistenwechsel versehen sind.

3. Stromabnehmersystem nach Anspruch 2, welches ein scherenartig aufgebautes und zu verstellendes Gestänge (5,7) umfasst, an dessen freiem Ende die Schleifleiste(9) gelenkig angeordnet ist, **dadurch gekennzeichnet,** daß die Schleifleiste( 9) an einem mit Halte- und Kontaktelementen zur mechanischen und elektrischen Ankoppelung der Schleifleiste (9) versehenen Schleifleistenträger (15) rastbar gehaltert ist.

4. Stromabnehmersystem nach Anspruch 3, **dadurch gekennzeichnet,** daß zur Aufnahme des Schleifleistenträgers (15) an den freien Enden des Gestänges (5,7) geschlitzte, Halbschalen bildende Muffen (17,17') befestigt sind, deren Schlitzbreite (B) so bemessen ist, daß die die Schleifleiste (9) tragenden Teile (12, 16) in die Muffen einlegbar sind, wobei die Anordnung so getroffen ist, daß die Muffen (17, 17') die Schleifleiste in einer abgesenkten Position des Stromabnehmers (1) zur Entnahme freigeben und in einer hochgefahrenen Position gegen Entnahme sperren.

5. Stromabnehmersystem nach einem der Ansprüche 1 bis 4 **dadurch gekennzeichnet,** daß die Transporteinrichtung (20) einen motorisch verstellbaren Greifarmmechanismus (21,24) umfasst, der Greif-und Rastelemente (24,24') zur Halterung der Schleifleiste während des Transportes enthält.

6. Stromabnehmersystem nach Anspruch 5, **dadurch gekennzeichnet,** daß die Greif- und Rastelemente (24,24') so ausgebildet sind, daß sie bei einem Andocken an die Schleifleiste(9) diese selbsttätig rastend halten.

7. Stromabnehmersystem nach einem der Ansprüche 1 bis 6, **dadurch gekennzeichnet,** daß die Schleifleiste (9) mit Halteelementen (19,19' ) versehen ist, welche mit den Greif- und Rastelementen (24, 24') zusammenwirken.

8. Stromabnehmersystem nach einen der Ansprüche 1 bis 7, **dadurch gekennzeichnet,** daß das Magazin (25) eine motorisch antreibbare, umlaufende Aufnahme- und Halteeinrichtung (30 bis 34) zur bevorratenden Halterung mehrerer Schleifleisten (9,26,27) enthält.

9. Stromabnehmersystem nach Anspruch 8, **dadurch gekennzeichnet,** daß die Aufnahme- und Halteeinrichtung (30 bis 34) einen Kettentrieb (30) mit zwei parallel verlaufenden endlosen Ketten (31,31') umfasst, die entlang ihrer Umlauflänge mehrere Verbindungselemente aufweist, an denen Aufnametüllen (34,34') zur bevorratenden Halterung der Schleifleisten (9,26,27) angeordnet sind, wobei das eine Kettenradpaar (33,33') des Kettentriebs (30) von einem gemeinsamen, außerhalb des Kettentriebes angeordneten Antriebsmechanismus (36 bis 38) angetrieben wird.
